# FASCICULE DE BREVET EUROPEEN

(11) **EP 0 574 323 B1**
(45) Date de publication et mention de la délivrance du brevet: **11.09.1996**
(21) Numéro de dépôt: 93401493.7
(22) Date de dépôt: 11.06.1993
(51) Int. Cl.: G02B 6/10, G02B 6/42

(54) **Guide d'onde métallique hélicoidal pour la transmission d'un faisceau laser et dispositif de découpe laser**
Spiralförmiger, metallischer Wellenleiter zur Übertragung eines Laserstrahlbündels und Laser-Schneideinrichtung
Helicoidal metallic waveguide for the transmission of a laser beam and laser cutting device

(30) Priorité: 12.06.1992 FR 9207080
(43) Date de publication de la demande: 15.12.1993
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Briand, Francis, F-75010 Paris (FR); Mancinelli, Marc, F-95000 Cergy (FR); Poncon, Vincent, F-95430 Auvers Sur Oise (FR)
(74) Mandataire: Le Moenner, Gabriel

(56) Documents cités:
- WO-A-90/01820
- US-A- 4 068 920
- US-A- 4 194 808
- PATENT ABSTRACTS OF JAPAN vol. 14, no. 264 (P-1057)1990 & JP-A-20 73 311
- APPLIED OPTICS. vol. 17, no. 2, Janvier 1978, NEW YORK US pages 316 - 319 KRAMMER 'Light waves guided by a single curved metallic surface'

## Description

La présente invention concerne les guides d'onde métalliques hélicoidaux pour la transmission d'un faisceau laser, du type "galerie chuchotante", le guide d'onde ayant un rayon nominal d'enroulement hélicoidal.

Dans ce type de guides d'onde, en forme de gouttière hélicoidale à deux rayons de courbure, décrit dans le document US-A-4.194.808, la propagation du faisceau laser à l'intérieur de la galerie se fait sous la forme de modes, qui sont chacun des répartitions spatiales particulières du champ électrique et qui présentent donc chacun leurs propres caractéristiques de propagation et de répartition d'énergie. On montre, en pratique, que le mode fondamental est une ellipse dont les dimensions dépendent de celles des deux rayons de courbure de la galerie et de la longueur d'onde du rayonnement, ce mode fondamental étant accompagné d'autres modes qui se différencient par leurs orientations et leur profil énergétique. Quand on injecte un faisceau laser à une extrémité de la galerie par l'intermédiaire de lentilles de focalisation sans mise en forme particulière du faisceau, ce dernier ne présente en général pas le profil d'un mode particulier et il se produit une décomposition ou un transfert de l'énergie incidente sur la plupart des modes excitables de la galerie. Chacun de ces modes se propage jusqu'à la sortie où il se recombine pour donner un profil de faisceaux très multi-modes, constitué d'un grand nombre de pics d'intensités inégales qui ne se prête que difficilement à des traitements optiques ultérieurs, notamment au niveau d'une focalisation, pour réaliser des opérations de découpe par laser de bonne qualité.

La présente invention a pour objet de proposer un guide d'onde métallique hélicoidal, ou galerie chuchotante, perfectionné, permettant, de façon simple, fiable et reproductible, d'obtenir un bon transfert de l'énergie incidente sur le mode fondamental ou sur un mode d'ordre proche dont la recombinaison en sortie produit un faisceau conservant de bonnes qualités optiques.

Pour ce faire, selon une caractéristique de l'invention, le guide d'onde comporte au moins une section terminale, typiquement la section d'entrée, dont le rayon d'enroulement croît progressivement depuis le rayon nominal jusqu'à un rayon maximal au moins deux fois supérieur au rayon nominal, typiquement au moins 10 fois supérieur à ce dernier, le rayon maximal étant typiquement supérieur à 10 mètres, c'est-à-dire approchant un rayon de courbure infini.

Selon une autre caractéristique de l'invention, le guide d'onde, ayant une concavité de rayon intérieur nominal déterminée, est caractérisé en ce que la section terminale a un rayon intérieur croissant progressivement depuis le rayon nominal jusqu'à un rayon intérieur maximal au moins deux fois supérieur au rayon intérieur nominal, typiquement supérieur à dix fois le rayon intérieur nominal.

La présente invention a également pour objet un dispositif de découpe laser, comprenant une source de faisceau laser infrarouge et un guide d'onde métallique hélicoidal tel que défini ci-dessus, la source de faisceau laser étant couplée à l'extrémité d'une première section terminale du guide d'onde avec le faisceau tangent à la surface interne de ladite extrémité de la section terminale.

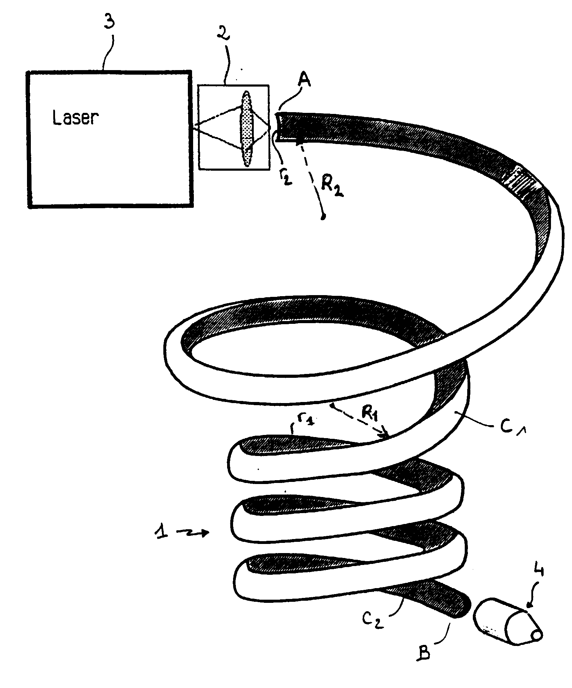

D'autres caractéristiques et avantages de la présente invention ressortiront de la description suivante d'un mode de réalisation, donnée à titre illustratif mais nullement limitatif, faite en relation avec le dessin annexé, sur lequel :
- la figure unique représente un dispositif de découpe laser avec un guide d'onde hélicoidal selon l'invention.

On reconnaît sur cette figure un guide d'onde métallique hélicoidal ou galerie chuchotante 1, par exemple en nickel ou en alliage de cuivre, ayant une extrémité d'entrée A couplée, via un dispositif de couplage à lentilles de focalisation 2, à un laser CO₂ à infrarouge, par exemple lui-même du type à galerie chuchotante, de façon que le faisceau laser soit tangent à la surface interne de l'extrémité A du guide d'onde. Le guide d'onde 1 comporte, de façon classique, une partie principale hélicoidale de rayon R₁ compris entre 5 cm et 20 cm et présentant une section en forme de gouttière de rayon intérieur constant r₁ compris entre 3,5 et 10 mm, typiquement de l'ordre de 5 mm. La totalité de la surface intérieure (concave), parfaitement polie, du guide d'onde 1 est revêtue d'une couche de matériau optique, typiquement d'or.

Selon l'invention, le guide d'onde comprend, au moins à son entrée, une section terminale A-C₁ dont le rayon d'enroulement R croît progressivement, depuis la zone intermédiaire C₁, de R₁ à R₂, le rayon maximum R₂ étant beaucoup plus grand que le rayon nominal R₁ et étant idéalement supérieur à 10 mètres, c'est-à-dire proche d'un rayon de courbure infini.

Pour passer progressivement du rayon nominal R₁ au rayon maximum R₂, la longueur développée de la section terminale C₁-A est supérieure à 5 cm, typiquement supérieure à 20 cm et avantageusement supérieure à 50 cm selon la grandeur du rayon maximal R₂.

Dans le cas d'un dispositif de découpe laser, tel que représenté, l'extrémité de sortie B du guide d'onde est couplée à un dispositif de focalisation 4. Dans ce cas, le guide d'onde 1 comprend avantageusement une seconde section terminale C₂-B où le rayon d'enroulement croît également progressivement depuis le rayon nominal R₁ jusqu'à un deuxième rayon maximal R_{B} supérieur à deux fois le rayon nominal R₁ mais non nécessairement aussi grand que le premier rayon maximal R₂ à l'entrée A du guide d'onde, la longueur développée de la deuxième section terminale C₂-B étant également supérieure à 5 cm, mais pouvant être inférieure à 20 cm.

Selon une autre caractéristique de l'invention, au moins la section terminale d'entrée C₁-A est conformée de façon que le rayon intérieur nominal r croîsse également, de C₁ à l'entrée A, de façon progressive depuis la valeur nominale r₁ jusqu'à un rayon intérieur maximal r₂, au moins deux fois supérieur au rayon nominal r₁, et avantageusement au moins dix fois supérieur à ce dernier. La seconde section terminale C₂-B peut également, optionnellement, avoir un rayon intérieur croissant depuis le rayon intérieur nominal r₁ jusqu'à un rayon maximal r_{B} au moins supérieur à r₁.

Les variations des rayons R et r sont obtenues avantageusement par le procédé de formage selon la demande de brevet européen EP 93 401 494.5 déposée ce même jour par la Demanderesse et intitulée : "Procédé et dispositif de fabrication d'un guide d'onde métallique souple hélicoidal pour faisceau laser", où le guide d'onde est poli et mis en forme par passage dans au moins deux postes de formage successifs comprenant chacun une paire de galets profilés coopérants, concave et convexe, la variation du rayon d'enroulement hélicoidal étant obtenue en faisant varier progressivement la position du galet final de mise en forme et la variation progressive du rayon intérieur de la galerie étant obtenue en faisant varier progressivement l'écartement entre galets des postes de formage.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art. En particulier, selon les applications et les puissances laser, la partie à rayon nominal d'enroulement R₁ du guide d'onde peut être réduite à une ou quelques spires, au profit de sections terminales allongées C₁-A et C₂-B à variation très progressive du rayon de courbure R et/ou r.

## Revendications

1. Guide d'onde métallique helicoidal (1) du type à "galerie chuchotante" pour la transmission d'un faisceau laser, le guide d'onde ayant un rayon nominal d'enroulement hélicoidal (R₁), caractérisé en ce qu'il comporte au moins une première section terminale (C₁-A ; C₂-B) dont le rayon d'enroulement (R) croît progressivement depuis le rayon nominal (R₁) jusqu'à un rayon maximal (R₂) au moins deux fois supérieur au rayon nominal (R1).

2. Guide d'onde selon la revendication 1, caractérisé en ce que le rayon d'enroulement maximal (R₂) est au moins dix fois supérieur au rayon nominal (R₁).

3. Guide d'onde selon l'une des revendications précédentes, ayant une concavité de rayon intérieur nominal (r₁), caractérisé en ce que la section terminale (C₁-A ; C₂-B) a un rayon intérieur croissant progressivement depuis le rayon nominal (r₁) jusqu'à un rayon intérieur maximal (r₂) au moins deux fois supérieur au rayon intérieur nominal (r₁).

4. Guide d'onde selon la revendication 3, caractérisé en ce que le rayon intérieur maximal (r₂) est au moins dix fois supérieur au rayon intérieur nominal (r₁).

5. Guide d'onde selon l'une des revendications précédentes, caractérisé en ce que la section terminale (C₁-A ; C₂-B) a une longueur développée supérieure à 5 cm.

6. Guide d'onde selon la revendication 5, caractérisé en ce que la section terminale a une longueur développée supérieure à 20 cm.

7. Guide d'onde selon la revendication 6, caractérisé en ce que la section terminale a une longueur développée supérieure à 50 cm.

8. Dispositif de découpe laser comprenant une source de faisceau laser infrarouge (3) et un guide d'onde métallique hélicoidal (1) du type à "galerie chuchotante", caractérisé en ce que le guide d'onde (1) est conforme à l'une des revendications précédente 1 à 7, la source de faisceau laser (3) étant couplée à l'extrémité libre (A) de ladite premiere section terminale (C₁-A) du guide d'onde, avec le faisceau laser tangent à la surface interne de ladite extrémité libre (A).

9. Dispositif selon la revendication 8, caractérisé en ce qu'il comprend un dispositif de focalisation (4) couplé à l'extrémité libre (B) d'une seconde section terminale (C₂-B) du guide d'onde (1).

## Patentansprüche

1. Schraubenförmig verlaufender, metallischer Wellenleiter (1) nach Art einer sog. Flüstergallerie zur Übertragung eines Laserstrahls, mit einem nominalen Radius der Schraubenwindung (R₁), dadurch gekennzeichnet, daß dieser wenigstens einen ersten Endbereich (C₁-A; C₂-B) aufweist, dessen Windungsradius (R) von dem nominalen Radius (R₁) bis zu einem maximalen Radius (R₂), der wenigstens doppelt so groß wie der nominale Radius (R₁) ist, progressiv zunimmt.

2. Wellenleiter nach Anspruch 1, dadurch gekennzeichnet, daß der maximale Windungsradius (R₂) wenigstens zehnmal so groß wie der nominale Radius (R₁) ist.

3. Wellenleiter nach einem der vorstehenden Ansprüche, mit einer Austiefung mit einem inneren, nominalen Radius (r₁), dadurch gekennzeichnet, daß der Endbereich (C₁-A; C₂-B) einen inneren Radius hat, der von dem nominalen Radius (r₁) bis zu einem maximalen inneren Radius (r₂), der wenigstens doppelt so groß wie der innere, nominale Radius (r₁) ist, progressiv zunimmt.

4. Wellenleiter nach Anspruch 3, dadurch gekennzeichnet, daß der innere, maximale Radius (r₂) wenigstens zehnmal so groß wie der innere, nominale Radius (r₁) ist.

5. Wellenleiter nach einem der vorstehenden Ansprüche, dadurch gekennzeichnet, daß der Endbereich (C₁-A; C₂-B) eine abgewickelte Länge von mehr als 5 cm hat.

6. Wellenleiter nach Anspruch 5, dadurch gekennzeichnet, daß der Endbereich eine abgewickelte Länge von mehr als 20 cm hat.

7. Wellenleiter nach Anspruch 6, dadurch gekennzeichnet, daß der Endbereich eine abgewickelte Länge von mehr als 50 cm hat.

8. Laserschneidevorrichtung mit einer Infrarot-Laserstrahlquelle (3) und einem schraubenförmigen, metallischen Wellenleiter (1) nach Art einer sog. Flüstergallerie, dadurch gekennzeichnet, daß der Wellenleiter (1) gemäß einem der vorstehenden Ansprüche 1 bis 7 ausgebildet ist, wobei die Laserstrahlquelle (3) an das freie Ende (A) des ersten Endbereichs (C₁-A) des Wellenleiters gekoppelt ist, und das Laserstrahlbündel die innere Oberfläche des freien Endes (A) tangiert.

9. Vorrichtung nach Anspruch 8, dadurch gekennzeichnet, daß diese eine Fokussierungsvorrichtung (4) umfaßt, die an das freie Ende (B) des zweiten Endbereichs (C₂-B) des Wellenleiters (1) gekoppelt ist.

## Claims

1. Helicoidal metallic wave guide (1), of the type with a "whispering gallery", for transmitting a laser beam, the said wave guide having a nominal helicoidal winding radius (R₁), characterized in that it comprises at least one first end section (C₁-A; C₂-B), the winding radius (R) of which increases progressively from the nominal radius (R₁) to a maximum radius (R₂) which is at least two times greater than the nominal radius (R₁).

2. Wave guide according to claim 1, characterized in that the maximum winding radius (R₂) is at least ten times greater than the nominal radius (R₁).

3. Wave guide according to one of the preceding claims, having a concavity with a nominal internal radius (r₁), characterized in that the end section (C₁-A; C₂-B) has an internal radius which increases progressively from the nominal radius (r₁) to a maximum internal radius (r₂) which is at least two times greater than the nominal internal radius (r₁).

4. Wave guide according to claim 3, characterized in that the maximum internal radius (r₂) is at least ten times greater than the nominal internal radius (r₁).

5. Wave guide according to one of the preceding claims, characterized in that the end section (C₁-A; C₂-B) has an evolute length which is greater than 5 cm.

6. Wave guide according to claim 5, characterized in that the end section has an evolute length which is greater than 20 cm.

7. Wave guide according to claim 6, characterized in that the end section has an evolute length which is greater than 50 cm.

8. Laser type cutting device comprising an infrared laser beam source (3) and a helicoidal metallic wave guide (1) of the type with a "whispering gallery", characterized in that the wave guide (1) is in conformity with one of the preceding claims 1 to 7, the laser beam source (3) being coupled to the free end (A) of the said first end section (C₁-A) of the wave guide, with the laser beam tangential to the internal surface of the said free end (A).

9. Device according to claim 8, characterized in that it comprises a focussing device (4) coupled to the free end (B) of a second end section (C₂-B) of the wave guide (1).
